# EUROPÄISCHE PATENTSCHRIFT

(11) **EP 2 526 141 B1**
(45) Veröffentlichungstag und Bekanntmachung des Hinweises auf die Patenterteilung: **05.07.2017**
(21) Anmeldenummer: 11704199.6
(22) Anmeldetag: 21.01.2011
(51) Int. Cl.: C08J 7/02, C08J 7/04, B29C 67/00

(54) **VERFAHREN ZUR OBERFLÄCHENBEHANDLUNG**
METHOD FOR SURFACE TREATMENT
PROCÉDÉ DE TRAITEMENT DE SURFACE

(30) Priorität: 21.01.2010 DE 102010001101
(43) Veröffentlichungstag der Anmeldung: 28.11.2012
(73) Patentinhaber: Mykita Studio GmbH, 10115 Berlin (DE)
(72) Erfinder: HAFFMANS, Daniel, 10115 Berlin (DE); GOTTSCHLING, Harald, 10435 Berlin (DE); HAFFMANS, Phillipp, 10115 Berlin (DE); KRÜGER, Moritz, 10437 Berlin (DE)
(74) Vertreter: Müller & Schubert
(86) Internationale Anmeldenummer: PCT/EP2011/050801
(87) Internationale Veröffentlichungsnummer: WO 2011/089208

(56) Entgegenhaltungen:
- US-A1- 2008 218 683
- DATABASE WPI Week 200773 Thomson Scientific, London, GB; AN 2007-779333 XP002637383, & CN 1 970 202 A (UNIV HUAZHONG SCI&TECHNOLOGY) 30. Mai 2007 (2007-05-30)
- DATABASE WPI Week 200841 Thomson Scientific, London, GB; AN 2008-G44558 XP002637384, & JP 2008 106797 A (HITACHI FUNMATSU YAKIN KK) 8. Mai 2008 (2008-05-08)
- SHI, D.; GIBSON, I.: "Surface finishing of Selective Laser Sintering Parts with Robot", SOLIDE FREEFORM FABRICATION SYMPOSIUM PROCEEDINGS, 1998, Seiten 27-35, XP009148420,
- DATABASE WPI Week 199725 Thomson Scientific, London, GB; AN 1997-276228 XP002637386, & JP 9 099699 A (MIYOSHI SHIKKITEN KK) 15. April 1997 (1997-04-15)
- M Schmid ET AL: "FINISHING OF SLS-PARTS FOR RAPID MANUFACTURING (RM) - A COMPREHENSIVE APPROACH -", , 1 February 2009 (2009-02-01), pages 1-10, XP055182429, Retrieved from the Internet: URL:http://sffsymposium.engr.utexas.edu/Ma nuscripts/2009/2009-01-Schmid.pdf [retrieved on 2015-04-13]

## Beschreibung

Die vorliegende Erfindung betrifft ein Verfahren zur Oberflächenbehandlung lasergesinterter Kunststoffgegenstände.

Mit Lasersinterverfahren lassen sich räumliche Strukturen aus einem pulverförmigen Ausgangsstoff herstellen. Dabei handelt es sich um ein generatives Schichtbauverfahren, d.h. das Werkstück wird Schicht für Schicht aufgebaut.

Gesinterte Gegenstände weisen eine raue Oberfläche auf, die insbesondere bei Gegenständen aus Kunststoff leicht verschmutzt und dadurch unansehnlich wird.

Die Oberflächenbehandlung von Kunststoffen, insbesondere auch Polyamiden, ist an sich bekannt. So wird in der DE 10 2007 035 923 A1 die Oberfläche eines Bedienelements mit einer Farbschicht versehen. Hierbei werden insbesondere UV-Lacke, Hydrolacke oder Polyurethanlacke verwendet, welche aufgetragen werden und aushärten. Weiterhin beschreibt die DE 36 36 606 A1 ein Verfahren zur Vorbehandlung von Polyamidformteilen für die haftfeste Lackierung. Hierbei werden die Oberflächen mit Salzlösungen in einem nichtätzenden, organischen Quell- oder Lösemittel für Polyamide behandelt und anschließend mit einer Lackschicht versehen.

Weiterhin offenbart US 2008/0218683 ein Brillengestell, das PCTG umfasst und das beschichtet werden kann.

M. Schmidt et al. offenbaren in "Finishing Of SLS-Parts For Rapid Manufacturing (RM) - A Comprhensive Approach ", 1. Februar 2009 (2009-02-01), Seiten 1-10, im Internet gefunden unter URL:http://sffsymposium.engr.utexas.edu/Manuscripts/2009/ 2009-01-Schmid.pdf, ein Verfahren zur Oberflächenbehandlung lasergesinterter Kunststoffgegenstände.

Die im Stand der Technik bekannten Verfahren zur Vorbereitung von Kunststoffoberflächen, insbesondere Polyamiden, für die anschließende Lackierung, sind für lasergesinterte Kunststoffe nicht anwendbar. Die Oberflächenstruktur der lasergesinterten Kunststoffe sind nicht mit denen vergleichbar, die mit herkömmlichen Verfahren wie Spritzgussverfahren oder Extrusion hergestellt sind. Aufgabe der Erfindung ist es, eine behandelte bzw. beschichtete Oberfläche eines lasergesinterten Gegenstandes bereitzustellen, die einen Schutz vor Umwelteinflüssen liefert und die haptischen Eigenschaften des Gegenstandes verbessert.

Die Aufgabe der Erfindung wird durch ein Verfahren gemäß dem Hauptanspruch gelöst. Vorteilhafte Ausgestaltungen des erfindungsgemäßen Verfahrens sind in den abhängigen Unteransprüchen gekennzeichnet.

Die Aufgabe wird somit durch ein Verfahren zur Oberflächenbehandlung lasergesinterter Kunststoffgegenstände, welche aus Polyamid, Polystyrol oder glaskugel- oder carbonfasergefülltem Polyamid, Polyamid 11, Polyamid 12, Polypropylen oder deren Mischungen erzeugt wurden, gelöst, bei dem man die folgenden Schritte nacheinander ausführt:
a) Glätten der Oberflächen der Kunststoffgegenstände mittels eines Gleitschleifverfahrens;
b) Waschen der geglätteten Kunststoffgegenstände mit klarem Wasser oder mittels eines Ultraschallbads mit vollentsalztem Wasser;
c) Färben der Kunststoffgegenstände mittels des in Kontakt Bringens mit Farbstoffen, wobei die Farbstoffe Textilfarbstoffe sind, ausgewählt aus Säurefarbstoffen, Metallkomplexfarbstoffen, Dispersionsfarbstoffen, Direktfarbstoffen oder Reaktivfarbstoffen und
d) Imprägnieren der Oberflächen der Kunststoffgegenstände mittels des in Kontakt Bringens mit Ölen, Fetten oder deren Kombinationen.

Bevorzugt ist es, dass man das Waschen im Schritt b) vorzugsweise nach jedem Gleitschliff durchführt. Dabei kann eine Reinigung des Gegenstands mit klarem Wasser erfolgen, um die Schleiflauge (Compound) abzuwaschen. Anschließend kann der Gegenstand getrocknet werden.

In einer Ausführungsform ist im Schritt b) weiterhin, vor jeglicher Beschichtung für das Waschen des Werkstükkes ein Ultraschallbad mit vollentsalztem Wasser einzusetzen, da dieses verlässlich sämtliche Schleifstaubreste und Auflagen vom Werkstück entfernt.

Offenbart wird ein Verfahren, bei dem man das Färben und/oder Beschichten der Kunststoffgegenstände in Schritt c) mittels des in Kontakt Bringens mit Farbstoffen, Lakken, Flockfasern, Latex, galvanischen Lösungen, Partikeldämpfen, Sol-Gel-Beschichtungsformulierungen oder deren Kombinationen durchführt.

In einem weiterhin offenbarten Ausführungsbeispiel wird das Versiegeln bzw. Imprägnieren der Oberfläche der Kunststoffgegenstände in Schritt d) mittels des in Kontakt Bringens mit Ölen, Fetten, antibakteriellen Agenzien, UV-undurchlässigen Mitteln, Klarlacken, Latex oder deren Kombinationen durchgeführt.

Besonders bevorzugt ist ein Ausführungsbeispiel des erfindungsgemäßen Verfahrens, bei dem man nach Schritt d) die Kunststoffgegenstände einem Tampondruck, Siebdruck, Flachdruck, Sublimationsdruck oder Laserbeschriftung oder deren Kombinationen unterzieht.
Insbesondere vorteilhaft ist ein Ausführungsbeispiel des erfindungsgemäßen Verfahrens, bei dem man mindestens zwei Färbeschritte c) durchführt, wobei die Färbeschritte unterschiedlich sein können und wobei man gegebenenfalls zwischen oder vor dem jeweiligen Färbeschritt einen Schritt zur Veränderung der Rauigkeit der Oberfläche ausführt.

Bevorzugt ist ein Ausführungsbeispiel des erfindungsgemäßen Verfahrens, bei dem man nach dem Schritt c) oder nach den jeweiligen Färbeschritten einen Waschschritt und/oder Trocknungsschritt anschließt.

Erfindungsgemäß wurde der Kunststoffgegenstand durch Lasersintern aus Polyamid, Polystyrol oder glaskugel- oder carbonfasergefülltem Polyamid, Polyamid 11, Polyamid 12, Polypropylen oder deren Mischungen erzeugt.

Insbesondere vorteilhaft ist ein Ausführungsbeispiel des erfindungsgemäßen Verfahrens, bei dem die lasergesinterten Kunststoffgegenstände Bestandteile eines Brillengestells, Schmuckstücks, Lampenschirms oder Schreibgeräts sind.

Insbesondere bevorzugt ist ein Brillengestell, das mittels des erfindungsgemäßen Verfahrens erhalten wurde.

Des Weiteren ist ein Verfahren offenbart, bei dem man die folgenden Schritte durchführt:
a) Glätten,
b) Grundieren,
c) Glätten und
d) Lackieren oder Beflocken oder Beschichten der Oberfläche des Gegenstandes.

Dabei ist es ganz besonders bevorzugt, dass man das Glätten mittels eines Gleitschleifverfahrens durchführt.

Durch Lasersintern hergestellte Gegenstände weisen in der Regel eine weiße Färbung auf und besitzen eine raue Oberfläche, die schnell verschmutzt und eine geringe Resistenz gegenüber UV-Strahlen besitzt. Mit dem erfindungsgemäßen Verfahren ist es möglich, die lasergesinterten Gegenstände individuell zu gestalten und vor Umwelteinflüssen zu schützen.

Die Kunststoffgegenstände sind durch Lasersintern der Werkstücke in Polyamid 12 (auch Polyamid 11, Polystyrol und glaskugel- bzw. carbonfasergefüllte Pulver) erhältlich.

Hierbei werden bereits in manchen Geometrien mit exponierten Anschlussstellen mechanisch relevanter Bauteile, die Präzision erfordern, Abbrechteile als Schutzkappen mitgesintert, um den Einsatz zusätzlicher Silikonteile beim Schliff zu vermeiden.

Das Lasersintern des Gegenstandes sollte mit möglichst geringen Schichtdicken von ungefähr 0,1 mm durchgeführt werden. Eine gleichmäßige Bestückung des Bauraums mit Teilen und gleichmäßiges Auskühlen des Bauraums führen zu homogener Materialstruktur. Ungleichmäßiges Aussintern der Bauteile hingegen hat einen direkten Einfluss auf deren mechanische Eigenschaften und Oberflächenqualität und ist daher zu vermeiden.

Nach dem Auspacken (Entfernen des Gegenstandes aus dem unversinterten Pulver) erfolgt eine Reinigung durch Glaskugel- oder Korundstrahlen in einer Strahlkammer, um Pulverreste zu entfernen. Das hat jedoch kaum Einfluss auf die Oberfläche des Gegenstandes.

Den lasergesinterten Gegenstand glättet man vorzugsweise mittels Gleitschleifen. Das Gleitschleifen erfolgt mit für den jeweiligen Gegenstand geeigneten Schleifkörpern, wie beispielsweise Korund und einem Zusatzmittel, wie beispielsweise einem Trennmittel, einem Mittel zum Entfetten oder ähnliche, in wässriger Lösung (Compound).

Hierbei verwendet man eine Fliehkraftschleifanlage, bei der die Werkstücke durch Rotation des Schleifgemenges in Reibung mit den Schleifkörpern gebracht werden. Rundvibratorschleifanlagen sind auch geeignet. Bei Fliehkraftschleifanlagen ist eine kürzere, stärkere Bearbeitung möglich, die bei besseren Oberflächen weniger Geometrieverfälschung (Verrundung) erzeugt. Die verwendeten Schleifkörper und die Bearbeitungszeit sind abhängig vom Schleifapparat und Werkstück. Die Schleifkörper sind in verschiedensten Dichten, Formen und Härten erhältlich.

Der Einsatz von Rundvibratoren für das Gleitschleifen ist dem Fachmann bekannt, Fliehkraftanlagen hingegen werden für solche Teile jedoch üblicherweise nicht verwendet. Es erfordert sehr genaue Kenntnis der Faktoren Schleifkörpermaterial und -geometrie, Lösungskonzentration und -menge, Schleifzeit und -intensität und nicht zuletzt Kenntnis der Maschinen, um das gewünschte Schleifergebnis zu erhalten. Darüber hinaus kann für manche, besonders großflächigere, rundere Teile ein Rundvibrator geeigneter sein, während eckigere, kompaktere Teile besser mit Fliehkraftanlagen zu bearbeiten sind. Sogar Kombinationen beider Maschinentypen können erforderlich sein, um homogene, glatte Oberflächen zu erzeugen.

Den Gegenstand reinigt und trocknet man vorzugsweise nach dem Gleitschleifen. Nach jedem Gleitschliff kann eine Reinigung des Gegenstands mit klarem Wasser erfolgen, um die Schleiflauge (Compound) abzuwaschen. Anschließend kann der Gegenstand getrocknet werden.

Es empfiehlt sich, vor jeglicher Beschichtung für die Reinigung des Werkstückes ein Ultraschallbad mit vollentsalztem Wasser einzusetzen, da dieses verlässlich sämtliche Schleifstaubreste und Auflagen vom Werkstück entfernt. Auflagen (z. B. Fette, Salze) können das Verhalten eines Lacks oder die Abdeckung mit Farbe beim Einfärben beeinträchtigen.

Gegebenenfalls erfolgt nun die Trennung der Abbrechteile vom Werkstück. Dies geschieht je nach Ausformung einfach per Hand oder mit einem Cutter, gegebenenfalls muss nachgeschliffen werden. Allerdings benötigen nicht alle Teile solche Schutzkappen.

Nach dem Glätten der Oberfläche des Gegenstandes kann diese gefärbt bzw. grundiert werden.

Durch Gleitschliffverfahren wird die Oberfläche geometrieabhängig besonders an Kanten und konvexen Flächen, weniger aber in konkaven Bereichen bearbeitet. Um diese Heterogenität der Oberflächenqualität auszugleichen, kann nach dem Gleitschliff ein Strahlverfahren zum Einsatz kommen. Als Strahlmittel eignen sich insbesondere Edelkorund, Keramik und Glasperlen. Dieser Arbeitsgang kann die Oberfläche überall gleichmäßig aufrauen, was eine Farbaufnahme bei der Färbung oder auch den Halt einer Grundierungsschicht verbessern kann. Die Endrauigkeit ist dabei geringer als die Ausgangsrauigkeit nach dem Sintern. Das nachträgliche Strahlen dient einzig dem Ausgleich zwischen sehr glatten und sehr rauen Flächen.

Das Färben der Werkstücke erfolgt beispielsweise mit Textilfarben. Hierbei werden vorwiegend Säurefarbstoffe bei ca. 105 °C bis 135 °C verwendet. Höhere Temperaturen würden die Teile verformen. Bei Schwarzfärbung kann auch ein Metallkomplexfarbstoff zum Einsatz kommen. Alle Farbstoffe sind für Textilien (meistens Polyamidfaser) ausgelegt und sind daher unbedenklich in Bezug auf Allergie, Lebensmittelechtheit usw. Jede neue Farbeinstellung wird zuvor gegebenenfalls auf Licht- und Schweißechtheit geprüft.

Eine UV-Stabilisierung des Kunststoffteils lässt sich auch durch Zusätze im Färbemittel realisieren.

Die Färbung erfolgt beispielsweise in kleinen zylindrischen Stahlbehältern, die, mit Färbelösung und Werkstükken gefüllt, in einem unter Druck erhitzten Bad mittels Rollen bewegt werden. Dieses Verfahren hält die mechanische Belastung der Kunststoffgegenstände gering.

Bei sehr intensiven Farben oder bei in der Farbannahme problematischen Mischtönen kann ein zweiter Färbedurchgang notwendig sein.

Zusatzfunktionen wie antibakterielle Beschichtungen oder UV-Schutz lassen sich ebenfalls einbringen.

Je nach Art der Färbung kann der Schritt wiederholt werden oder es können Schritte mit unterschiedlichen Färbeverfahren miteinander kombiniert werden.

Die Oberfläche grundiert man vorzugsweise mit Klarlack. Eine Unterdrucktrocknung kann hier dazwischengeschaltet werden, um die prozessbedingten Poren in der Oberfläche des Sinterteils besser zu infiltrieren. Der Lack wird nach dem Auftragen forciert getrocknet, d.h. in einem Ofen bei 60 bis 80 °C, um die Bearbeitungszeit zu verringern und Staubeinschlüsse zu vermeiden.

Nach dem Grundieren und Trocknen der Oberfläche wird die Oberfläche abermals geglättet. Das Glätten erfolgt durch 10 bis 50 Minuten langes Gleitschleifen. Anschließend wird die Oberfläche lackiert.

Die Oberfläche lackiert man vorzugsweise mit Acryllackfarben. Zweikomponentige Polyurethanharze sind hier besonders geeignet. Durch Zugabe von Verdünnung kann die Viskosität des Lacks optimal der Oberflächenrauhigkeit angepasst werden. Aber auch andere, dem Fachmann bekannte Lacke sind geeignet. Auch Einbrennlack kann auf eher massiven Teilen Verwendung finden. Bei zu geringen Querschnitten des Werkstücks kann sich dieses jedoch beim Härtungsprozess im Ofen verformen. Das Auftragen einer Lackschicht ist notwendig für den Lichtschutz (UV-Schutz) des gesinterten Gegenstandes, dient aber auch ästhetischen Gesichtspunkten.

Bei allen Lacken ist darauf zu achten, dass sie hautverträglich und gesundheitlich unbedenklich sind, Temperaturen von bis zu 120 °C aushalten (beispielsweise einen Heißluftfön), nicht abplatzen wenn der Gegenstand gebogen oder verdreht wird, und UV-stabil sind. Es ist weiter darauf zu achten, dass die verwendeten Lacke auch über lange Zeit keine Versprödung im gesinterten Kunststoff hervorrufen. Um einen wirksamen Lichtschutz bzw. Schutz vor UV-Strahlen zu gewährleisten, enthalten die Lacke Lichtschutzmittel, wie zum Beispiel sterisch gehinderte Amine (HALS: hindered amine light stabilizer), Benzophenolderivate, Benzotriazolderivate und/oder Cyanoacrylatderivate.

Um eine fleckige Oberfläche zu erhalten, kann man eine farbige Grundierung überschleifen und klar überlackieren.

Für farbig abgesetzte Gegenstände gilt es, ein aufwendiges Abkleben vor dem Lackieren zu vermeiden, indem man diese als Baugruppen gestaltet, separat lackiert und dann mittels Clipverbindung oder Verklebung zusammenfügt.

Auf alle Lacke zu verzichten und die Oberfläche nur mittels Gleitschliff und gegebenenfalls Einfärbung zu behandeln ist ebenfalls möglich. Dies kann aber die UV-Beständigkeit reduzieren und der Gegenstand verschmutzt möglicherweise leichter.

Ein Anlösen der Oberfläche ist im Fall von beispielsweise Polyamid 12 mit konzentrierter Ameisensäure bei über 70 °C möglich. Auch eine Bedampfung mit einem entsprechenden Lösemittel unter kontrollierter Temperatur kann zum Anlösen der Oberfläche angewandt werden. So kann auch eine bessere und geschlossenere Oberfläche entstehen, beziehungsweise eine solche, auf der Lack haftet.

Die Oberfläche versieht man vorzugsweise mit einer PVD-Beschichtung (PVD: physical vapor deposition / physikalische Dampfabscheidung) oder einer Sol-Gel-Beschichtung. Mit Sol-Gel-Beschichtungen, die bei der Trocknung einen zusätzlichen einebnenden Effekt aufweisen, kann man eine glatte Oberfläche erzeugen. Außerdem lassen sich solche Beschichtungen mit zusätzlichen Eigenschaften, wie zum Beispiel einem Lotuseffekt oder einer antibakteriellen Wirkung ausstatten.

Denkbar ist auch eine Beschichtung mit Plasma-Aufdampfverfahren, wie beispielsweise dem Valico^{®}-Verfahren, bei dem dünne (Metall-)Schichten auf der Oberfläche abgeschieden werden.

Die Oberfläche galvanisiert man vorzugsweise nach der PVD-Beschichtung. Die durch die Galvanisierung aufgebrachte Schicht dient sowohl dekorativen als auch funktionellen Aspekten, wie dem Schutz vor Verschmutzung oder Verkratzen.

Die folgenden Verfahrensschritte sind optional und können gegebenenfalls erfindungsgemäß verwendet werden:

### - Grundieren / Lackieren

Der Lackauftrag ist grundsätzlich durch Sprühen am besten zu realisieren. Tauchen oder Pinseln sind weniger praktikabel, aber dennoch möglich.

Jedes Lackieren sollte nach einem ersten Schleifgang erfolgen. Bei farblosen Klarlacken ist ein vorangehendes Färben möglich. Bei mehrschichtigem Lackaufbau empfiehlt sich ein Schliff nach jeder Schicht. Eine vollständige (am besten im Ofen forcierte) Austrocknung ist vor jedem Schliff gegebenenfalls erforderlich. Nach jedem Schliff und vor jedem Lackieren ist das Werkstück zu waschen und gegebenenfalls im Ultraschallbad zu reinigen.

Eine Variante des Lackierens kann folgendermaßen ausgeführt werden: Ohne Schliff oder nach sehr kurzem Schliff wird mit Farbe 1 grundiert, dann nach Trocknung direkt mit Farbe 2 darüber lackiert. Ein längerer Schliff legt Farbe 1 partiell wieder frei. Auf diese Weise lassen sich zweifarbige Effekte erzielen, welche die Schichtstruktur des Materials hervorheben.

### - Beflocken

Auch ein Beflocken der Kunststoffgegenstände kann vorgesehen werden. Als Fasermaterial für die Beflockung können Baumwoll-, Kunstseide-, Polyamid-, Polyester- oder Acrylfasern verwendet werden.

### - PVD-Beschichten (PVD: physical vapor deposition / physikalische Dampfabscheidung)

PVD-Beschichten ist besonders als Vorbereitung zum galvanischen Beschichten geeignet, aber auch in Alleinstellung erfindungsgemäß vorgesehen. Durch die teilkristalline Struktur des Polyamids werden PVD-Schichten ein unregelmäßiges Bild erzeugen, was aber durchaus erwünscht sein kann. Verwendet man die PVD-Schicht ohne eine Deckschicht (Klarlack) oder Galvanik, kann man auch hier eine Öl- oder Fettschicht aufbringen. Ein Klarlack ist als Deckschicht jedoch zu empfehlen, da sich eine PVD-Schicht auf dem relativ weichen Polyamid leicht abreibt.

### - Galvanisieren

Metallisierte Sinteroberflächen können galvanisch beschichtet werden. Um spiegelnd glatte Flächen zu erreichen, ist jedoch Handschliff zwischen den galvanischen Schichten notwendig. Eine mögliche Abfolge wäre PVD-Kupfer, galvanisch Verkupfern, Schliff, Vernickeln, Politur, Verchromen (oder Vergolden).

### - Tauchbeschichten mit Latex

Im ungeschliffenen Zustand kann das Sinterwerkstück im Tauchbad mit zähflüssiger Latexmilch beschichtet werden.

### -Einfärben

In einer weiteren bevorzugten Ausführungsform der Erfindung färbt man den Gegenstand vor dem Grundieren, d.h. vor Schritt b), ein. Bei dieser Ausführungsform führt man die anschließende Grundierung und Lackierung oder Beschichtung mit transparenten Lacken oder Beschichtungen aus, um die eingefärbte Oberfläche sichtbar zu halten und vor Verschmutzung zu schützen.

Statt einer Lackierung kann das Werkstück nach der Einfärbung auch mit einer silikon- öl- oder fetthaltigen Imprägnierung versehen werden. Dies kann händisch durch Auftrag mit einem Lappen oder im Sprühverfahren geschehen. Eine Imprägnierung schützt zwar ebenfalls vor Verschmutzung, erlaubt aber danach keine weitere Beschichtung. Die Imprägnierung ist so auch nur bei lasergesinterten Teilen sinnvoll und effektiv, da diese eine im Vergleich zu spritzgegossenen Teilen offene Oberflächenstruktur aufweisen. Bei herkömmlich hergestellten Kunststoffteilen würde eine solche Imprägnierung nicht ins Material eindringen und würde beim Gebrauch leicht abgewischt. Ein Einölen oder Einfetten oder Versehen mit einer silikonhaltigen Imprägnierungsschicht ist also speziell bei Sinterteilen vorteilhaft.

Das Einfärben erfolgt, wie oben beschrieben in einem Tauchbad.

Erfindungsgemäß färbt man den Gegenstand mit einem Säurefarbstoff, Metallkomplexfarbstoff, Dispersionsfarbstoff, Direktfarbstoff oder Reaktivfarbstoff ein.

Beim abschließenden Lackieren oder Beschichten der Oberfläche kann die Funktionalität erhöht werden, dies kann aber auch durch eine zusätzliche Lackierung oder Beschichtungen erfolgen.

Nachwaschen und Trocknung kann bei bestimmten Färbeverfahren erforderlich sein. Bei manchen Farben müssen die Werkstücke nachgewaschen werden, um eventuellen Farbabrieb zu minimieren.

Die Kunststoffgegenstände können dann gegebenenfalls bedruckt oder beschriftet werden. Ein Bedrucken der Teile ist vor dem Schliff nicht zu empfehlen. Auf einer relativ glatten Oberfläche gibt es die Möglichkeit, das Werkstück per Tampondruck zu bedrucken. Bei ebenen Flächen lassen sich auch Flachdruckverfahren wie Sublimationsdruck oder Siebdruck anwenden. Eine weitere Möglichkeit der Beschriftung ist die Laserbeschriftung.

Schließlich kann eine Versiegelung der Oberfläche erfolgen. Dies kann bevorzugt durch Einölen / Einfetten erfolgen. Dabei wird eine Schicht aus synthetischem, lebensmittelechtem, hochraffiniertem Öl aufgebracht. Das geschieht per Hand mit einem Lappen oder Handschuh. Pastöse Fette und hochviskose Öle sind besonders geeignet. Bevorzugt sind diese Öle geschmacks- und geruchsneutral, lebensmittelecht und farblos.

Durch diese Versiegelung wird die Farbe dunkler und intensiver, ein leichter, elfenbeinähnlicher Glanz wird erzeugt. Das Einfetten ist nicht nur bei körpernaher Anwendung sinnvoll, sondern bietet immer einen Schutz vor Umwelteinflüssen. Außerdem lässt sie dem Material die Eigenständigkeit und erzeugt eine Haptik, ähnlich einem geölten Hartholz.

Offenbart ist, dass man die Oberfläche mit einem Lichtschutz im Wellenlängenbereich von 100 bis 380 nm oder einem antibakteriellen Schutz oder einer Beschichtung, die einen Lotuseffekt aufweist, versieht.

Das oben beschriebene erfindungsgemäße Verfahren eignet sich besonders gut für die Herstellung von körpernahen Gegenständen, die mit der erfindungsgemäßen Oberfläche versehen sind.

Ein Gegenstand der vorliegenden Erfindung ist ferner ein Brillengestell, erhältlich nach einem erfindungsgemäßen Verfahren zur Oberflächenbehandlung.

Gegenstand der Erfindung ist neben einem Brillengestell aber beispielsweise auch ein Schmuckstück oder ein Lampenschirm oder ein Uhrgehäuse oder ein Schreibgerät. Gegenstände wie Brillengestelle, Schmuckstücke, Lampenschirme, Uhrgehäuse oder Schreibgeräte unterliegen der Mode und es ist häufig erwünscht, diese in geringen Stückzahlen mit einer individuellen Gestaltung herzustellen. Hierfür eignet sich das erfindungsgemäße Verfahren zur Oberflächenbehandlung in besonderer Weise.

Insbesondere Brillengestelle sind beim Tragen Umwelteinflüssen, wie UV-Strahlung und Verschmutzung, ausgesetzt. Daher ist es wichtig, ein Brillengestell, das aus einem gesinterten Kunststoff hergestellt wird, mit einer Oberfläche auszustatten, die einen genügenden Schutz vor UV-Strahlen und Verschmutzung bietet. Dies leistet die oben beschriebene erfindungsgemäße Oberfläche. Zudem ist die Möglichkeit gegeben, das Brillengestell farblich individuell zu gestalten.

Die erfindungsgemäße Oberfläche des lasergesinterten Gegenstandes besteht, sofern eine Lackierung vorgenommen wird, aus mindestens einer Schicht. Wenn mehrschichtig lackiert wird, z. B. in Form einer Grundierungsschicht und einer Lackschicht, können die Grenzflächen zwischen den Schichten durch Gleitschleifen geglättet werden. Zudem können weitere Schichten aufgetragen werden, die der Oberfläche besondere Eigenschaften verleihen.

Der geglättete Gegenstand ist vorzugsweise mit einem Klarlack grundiert. Hierzu eignen sich Zwei-Komponenten-Klarlacke, die einen Stammlack und einen Härter enthalten. Die geglättete Grundierung ist vorzugsweise mit einer Acryllackfarbe lackiert.

Sowohl der Klarlack, der beim Grundieren verwendet wird, als auch der beim Lackieren verwendete Lack, kann mit einem Lichtschutzmittel versetzt sein.

Anstatt einer Lackierung kann auf die Grundierung eine Beflockung aufgebracht werden. Geeignete Flockfasern bestehen aus Baumwolle, Kunstseide, Polyester, Viskose oder Polyamid. Verfahren zum Aufbringen der Faserflocken sind dem Fachmann bekannt.

Neben einer Lackierung oder Beflockung kann eine weitere Beschichtung auf die Grundierung aufgetragen werden.

Die weitere Beschichtung ist vorzugsweise eine PVD-Beschichtung (PVD: physical vapor deposition / physikalische Dampfabscheidung) oder eine Sol-Gel-Beschichtung.

Die PVD-beschichtete Oberfläche ist vorzugsweise galvanisiert.

Erfindungsgemäß ist der geglättete lasergesinterte Gegenstand eingefärbt. Die Färbung wird dabei direkt auf den unbeschichteten lasergesinterten Gegenstand aufgebracht. Hierzu taucht man den lasergesinterten Gegenstand in ein Tauchbad, das mit einem Farbstoff gefüllt ist. Gute Ergebnisse werden mit Textilfarben erzielt.

Erfindungsgemäß ist der lasergesinterte Gegenstand mit einem Säurefarbstoff, Metallkomplexfarbstoff, Dispersionsfarbstoff, Direktfarbstoff oder Reaktivfarbstoff eingefärbt.

Die Oberfläche ist vorzugsweise mit einem antibakteriellen Schutz und/oder einer Beschichtung, die einen Lotuseffekt aufweist, versehen. Die gewünschten Eigenschaften der Oberfläche können während der Grundierung oder Lackierung des lasergesinterten Gegenstandes erzeugt werden. Ist dies nicht der Fall, kann die Oberfläche mit einer weiteren Beschichtung überzogen werden, mit welcher die gewünschten Eigenschaften erzielt werden.

Der lasergesinterte Gegenstand ist vorzugsweise ein Brillengestell oder ein Schmuckstück oder ein Lampenschirm oder ein Uhrgehäuse oder ein Schreibgerät.

Im Folgenden wird die Erfindung anhand von Beispielen näher beschrieben.

### Gleitschleifverfahren:

Die lasergesinterten Gegenstände werden in einem runden Schleiftrog zwischen einer halben Stunde und vier Stunden lang mit rauten- und zylinderförmigen Schleifkörpern und einem Compound zur Bindung des Schleifstaubs rotiert. Durch die Rotationsbewegung und die Fliehkraft der Teile kommen die Werkstücke in Reibung mit den Schleifkörpern und werden durchmischt. Die Flüssigkeit wird währenddessen ständig in einer Zentrifuge gereinigt. Die Geometrie und Größe der Schleifkörper ist dabei von dem gesinterten Gegenstand abhängig. Die verwendeten Schleifkörper bestehen aus Korund. Geeignet sind auch keramische Schleifmittel.

Verwendet man Schleifkörper, deren Bindemittel ein Kunststoff ist, verändert sich das Gewichtsverhältnis von Schleifkörpern und Schleifgut, was je nach Gewicht der Werkstücke zu einem verbesserten Schleifverhalten führen kann.

### Einfärben der Oberfläche des gesinterten Gegenstandes:

Der durch Lasersintern hergestellte Gegenstand kann im Anschluss an das Glätten der Oberfläche eingefärbt werden. Ein gesinterter Gegenstand, zum Beispiel aus Polyamid 12 (Duraform® Polyamid Kunststoff von 3D Systems® Inc.), wird dabei in einem Tauchbad mit Textilfarben für Nylonfasern bei 100 bis 130 °C ca. 30 Minuten lang gefärbt.

### Grundieren und Lackieren:

Das Grundieren erfolgt auf der geglätteten und gegebenenfalls vorher eingefärbten Oberfläche. Zur Grundierung verwendet man vorzugsweise Zwei-Komponenten-Lack.

Das Lackieren erfolgt ebenfalls auf einer vorher geglätteten Fläche.

Für das Lackieren können sowohl farbige als auch klare oder transparente Lacke verwendet werden. Geeignete Lacke sind vor allem Lacke auf Acrylatbasis.

### Beflocken:

Statt einer farbigen Lackschicht oder einer Einfärbung des gesinterten Materials kann die Oberfläche auch beflockt werden. Hierfür ist es nicht unbedingt notwendig, die Oberfläche vorher zu grundieren. Als Fasermaterial für die Beflockung können Baumwoll-, Kunstseide-, Polyamid-, Polyester- oder Acrylfasern verwendet werden.

Mit dem erfindungsgemäßen Verfahren können Oberflächen von lasergesinterten Gegenständen aus Kunststoff aller Art erzeugt werden, wie diese von herkömmlich hergestellten Kunststoffgegenständen bekannt sind. Überraschenderweise wurde gefunden, dass die Gleitschleiftechnik auf lasergesinterten Kunststoffen eine Oberfläche erzeugt, welche direkt für den Auftrag von Schichten mittels lakkieren geeignet ist. Das erfindungsgemäße Verfahren stellt somit eine neue Technologie für die Oberflächenbehandlung von lasergesinterten Kunststoffen zur Verfügung.

## Patentansprüche

1. Verfahren zur Oberflächenbehandlung lasergesinterter Kunststoffgegenstände, welche aus Polyamid, Polystyrol oder glaskugel- oder carbonfasergefülltem Polyamid, Polyamid 11, Polyamid 12, Polypropylen oder deren Mischungen erzeugt wurden, wobei man nacheinander die folgenden Schritte ausführt:
a) Glätten der Oberflächen der Kunststoffgegenstände mittels eines Gleitschleifverfahrens;
b) Waschen der geglätteten Kunststoffgegenstände mit klarem Wasser oder mittels eines Ultraschallbads mit vollentsalztem Wasser;
c) Färben der Kunststoffgegenstände mittels des in Kontakt Bringens mit Farbstoffen, wobei die Farbstoffe Textilfarbstoffe sind, ausgewählt aus Säurefarbstoffen, Metallkomplexfarbstoffen, Dispersionsfarbstoffen, Direktfarbstoffen oder Reaktivfarbstoffen;
d) Imprägnieren der Oberflächen der Kunststoffgegenstände mittels des in Kontakt Bringens mit Ölen, Fetten oder deren Kombinationen.

2. Verfahren gemäß Anspruch 1, **dadurch gekennzeichnet, dass** man nach Schritt d) die Kunststoffgegenstände einem Tampondruck, Siebdruck, Flachdruck, Sublimationsdruck oder Laserbeschriftung oder deren Kombinationen unterzieht.

3. Verfahren nach Anspruch 1, **dadurch gekennzeichnet, dass** man mindestens zwei Färbeschritte c) durchführt, wobei die Färbeschritte unterschiedlich sein können und wobei man gegebenenfalls zwischen oder vor dem jeweiligen Färbeschritt einen Schritt zur Veränderung der Rauigkeit der Oberfläche ausführt.

4. Verfahren gemäß einem der voranstehenden Ansprüche, **dadurch gekennzeichnet, dass** man nach dem Schritt c) oder nach den jeweiligen Färbeschritten gemäß Anspruch 3, einen Waschschritt und/oder Trocknungsschritt anschließt.

5. Verfahren gemäß einem der voranstehenden Ansprüche, **dadurch gekennzeichnet, dass** die lasergesinterten Kunststoffgegenstände Bestandteile eines Brillengestells, Schmuckstücks, Lampenschirms oder Schreibgeräts sind.

6. Brillengestell, erhalten nach einem Verfahren gemäß einem der voranstehenden Ansprüche.

## Claims

1. Method for surface treatment of laser-sintered plastic objects, which are produced from polyamide, polystyrene, or glass bead or carbon fiber filled polyamide, polyamide 11, polyamide 12, polypropylene or mixtures thereof, wherein the following steps are performed successively:
a) smoothing the surfaces of the plastic objects by means of a slide finishing method;
b) washing the smoothed plastic objects with clear water or by means of an ultrasonic bath with demineralized water;
c) dyeing the plastic objects by means of contacting with dyes, wherein said dyes are textile dyes selected from acid dyes, metal complex dyes, dispersion dyes, direct dyes or reactive dyes;
d) impregnating the surfaces of the plastic objects by means of contacting with oils, greases or combinations thereof.

2. Method according to claim 1, **characterized in that** after step d) the plastic objects are subjected to a pad printing, screen printing, flat printing, sublimation printing or laser labeling or combinations thereof.

3. Method according to claim 1, **characterized in that** at least two dyeing steps c) are performed, wherein the dyeing steps can be different and wherein, if necessary, a step for changing the roughness of the surface is performed between or before the respective dyeing step.

4. Method according to one of the preceding claims, **characterized in that** a washing step and/or drying step is followed after step c) or after the respective dyeing steps according to claim 3.

5. Method according to one of the preceding claims, **characterized in that** the laser-sintered plastic objects are components of a spectacle frame, piece of jewelry, lampshade or writing utensil.

6. Spectacle frame, obtained by a method according to one of the preceding claims.

## Revendications

1. Procédé pour le traitement de surface d'objets en matière plastique frittés au laser, lesquels ont été produits à partir de polyamide, de polystyrène ou de polyamide chargé de billes de verre ou de fibres de carbone, de polyamide 11, de polyamide 12, de polypropylène ou de mélanges de ceux-ci, dans lequel on effectue successivement les étapes suivantes consistant à :
a) lisser la surface des objets en matière plastique au moyen d'un procédé de ponçage vibrant ;
b) laver les objets en matière plastique lissés à l'eau claire ou au moyen d'un bain à ultrasons avec de l'eau entièrement déminéralisée ;
c) colorer les objets en matière plastique au moyen de la mise en contact avec des colorants, les colorants étant des colorants textiles, sélectionnés parmi des colorants de type acide, des colorants de type complexe métallique, des colorants de type dispersion, des colorants directs ou des colorants réactifs ;
d) imprégner la surface des objets en matière plastique au moyen de la mise en contact avec des huiles, des graisses ou des combinaisons de celles-ci.

2. Procédé selon la revendication 1, **caractérisé en ce que** l'on soumet après l'étape d) les objets en matière plastique à une impression au tampon, une impression sérigraphique, une impression à plat, une impression par sublimation ou un marquage au laser ou une combinaison de ceux-ci.

3. Procédé selon la revendication 1, **caractérisé en ce que** l'on met en oeuvre au moins deux étapes de coloration c), dans lequel les étapes de coloration peuvent être différentes et dans lequel on effectue le cas échéant entre ou avant l'étape de coloration concernée une étape pour la modification de la rugosité de la surface.

4. Procédé selon l'une des revendications précédentes, **caractérisé en ce que** l'on ajoute après l'étape c) ou après les étapes de coloration concernées selon la revendication 3 une étape de lavage et/ou une étape de séchage.

5. Procédé selon l'une des revendications précédentes, **caractérisé en ce que** les objets en matière plastique frittés au laser sont des éléments constitutifs d'une monture de lunettes, d'une pièce de joaillerie, d'un abat-jour ou d'un instrument d'écriture.

6. Monture de lunettes, obtenue d'après un procédé selon l'une des revendications précédentes.
